# EUROPÄISCHE PATENTSCHRIFT

(11) **EP 0 440 833 B1**
(45) Veröffentlichungstag und Bekanntmachung des Hinweises auf die Patenterteilung: **08.06.1994**
(21) Anmeldenummer: 90102205.3
(22) Anmeldetag: 05.02.1990
(51) Int. Cl.: G01D 18/00

(54) **Winkelmesseinrichtung**
Angle measuring device
Dispositif pour mesurer des angles

(43) Veröffentlichungstag der Anmeldung: 14.08.1991
(73) Patentinhaber: Dr. Johannes Heidenhain GmbH, D-83292 Traunreut (DE)
(72) Erfinder: Ernst, Alfons, Dipl.-Ing., D-8225 Traunreut (DE)

(56) Entgegenhaltungen:
- EP-A- 0 048 851
- EP-A- 0 198 926
- DE-A- 1 423 111
- IBM TECHNICAL DISCLOSURE BULLETIN, Band 25, Nr. 3B, August 1982, Seiten 1648-1649, New York, US; L.D. RICHARDS: "Discrete channel decoder for optical encoder"

## Beschreibung

Die Erfindung betrifft eine Winkelmeßeinrichtung gemäß dem Oberbegriff des Anspruchs 1.

Eine derartige Winkelmeßeinrichtung wird beispielsweise bei Bearbeitungsmaschinen zur Messung der Relativlage eines Werkzeugs bezüglich eines zu bearbeitenden Werkstücks sowie bei einem Winkelmeßtisch zur hochpräzisen Winkelmessung oder Winkeleinstellung eines Prüfobjekts eingesetzt.

Eine Winkelmeßeinrichtung zur Messung der Relativlage zweier zueinander drehbarer Objekte besteht aus einer drehbar gelagerten Teilscheibe, die mit dem einen Objekt verbunden ist. Zur Abtastung der inkrementalen Winkelteilung der Teilscheibe ist wenigstens eine Abtasteinheit vorgesehen, die mit dem anderen Objekt verbunden ist. Die Winkelteilung einer solchen Teilscheibe ist jedoch fertigungsbedingt mit gewissen Teilungsfehlern behaftet, die bei Präzisionsmessungen zu nicht tragbaren Winkelmeßfehlern führen können.

In der Druckschrift "Industrielle Winkelmeßtechnik" von Wolfgang Beyer et al., Expert-Verlag, Band 260, 1990 ist auf Seite 59 eine Kalibriermethode beschrieben, bei der zur Ermittlung der Teilungsfehler der Winkelteilung einer ersten Winkelmeßeinrichtung eine zweite genauere Winkelmeßeinrichtung verwendet wird, deren Winkelteilung ebenfalls unbekannte, aber sehr genau reproduzierbare Teilungsfehler aufweist. Die erste Winkelteilung wird nun in verschiedenen Winkellagen mittels der stillstehenden zweiten Winkelteilung in mehreren Meßreihen vermessen; für jede Meßreihe wird die zweite Winkelteilung um einen bestimmten Winkelwert gegenüber der ersten Winkelteilung gedreht. Durch phasenrichtige Summierung der Meßwerte aller Meßreihen können die Teilungsfehler der beiden Winkelteilungen voneinander getrennt werden. Die Fehlerwerte der ersten Winkelteilung werden abgespeichert und bei der eigentlichen Messung zur Gewinnung fehlerfreier Winkelmeßwerte herangezogen. Nachteilig ist jedoch, daß eine zweite Winkelmeßeinrichtung mit etwa dem gleichen Genauigkeitsstandard wie die zu kalibrierende erste Winkelmeßeinrichtung sowie eine mechanische Schaltvorrichtung zum Weiterschalten der jeweiligen Winkelzuordnung zwischen den beiden Winkelteilungen für die einzelnen Meßreihen benötigt werden. Zudem ist wegen der großen Anzahl von erforderlichen Meßreihen und wegen der Weiterschaltung der gegenseitigen Winkelzuordnung zwischen den beiden Winkelteilungen zwischen den Meßreihen ein großer Arbeitsaufwand vonnöten.

In der Offenlegungsschrift DE-A-1 423 111 wird eine andere Kalibriermethode zur Ermittlung von Winkelfehlern beschrieben, bei der durch mehrere Abtasteinheiten, die gegenüberliegend angeordnet sind, ein Kennwert X errechnet wird. Da dieser errechnete Wert X keinen Bezug zu einem Winkelbereich hat, ist eine individuelle Korrektur von Teilstrichen oder Winkelbereichen nicht möglich.

Der Erfindung liegt die Aufgabe zugrunde, für eine Winkelmeßeinrichtung der genannten Gattung eine schnelle und hochgenaue Kalibrierung mit einfachen Mitteln anzugeben.

Diese Aufgabe wird erfindungsgemäß durch die kennzeichnenden Merkmale des Anspruches 1 gelöst.

Die mit der Erfindung erzielten Vorteile bestehen insbesondere darin, daß durch das Vorsehen mehrerer Abtasteinheiten, die mehrere unterschiedliche Winkel miteinander einschließen, eine Kalibriereinrichtung in der Winkelmeßeinrichtung integriert ist, die keine mechanische Verstellung erfordert und die in kurzer Zeit eine schnelle und genaue Kalibrierung erlaubt.

Vorteilhafte Ausbildungen der Erfindung entnimmt man den Unteransprüchen.

Ausführungsbeispiele der Erfindung werden anhand der Zeichnung näher erläutert.

Es zeigen
- Figur 1: schematisch eine erste Winkelmeßeinrichtung mit einer Teilscheibe und mit fünf Abtasteinheiten;
- Figur 2: die Teilscheibe nach Figur 1 mit Einzelheiten;
- Figur 3: schematisch eine zweite Winkelmeßeinrichtung mit einer Teilscheibe und mit sechzehn Abtasteinheiten.

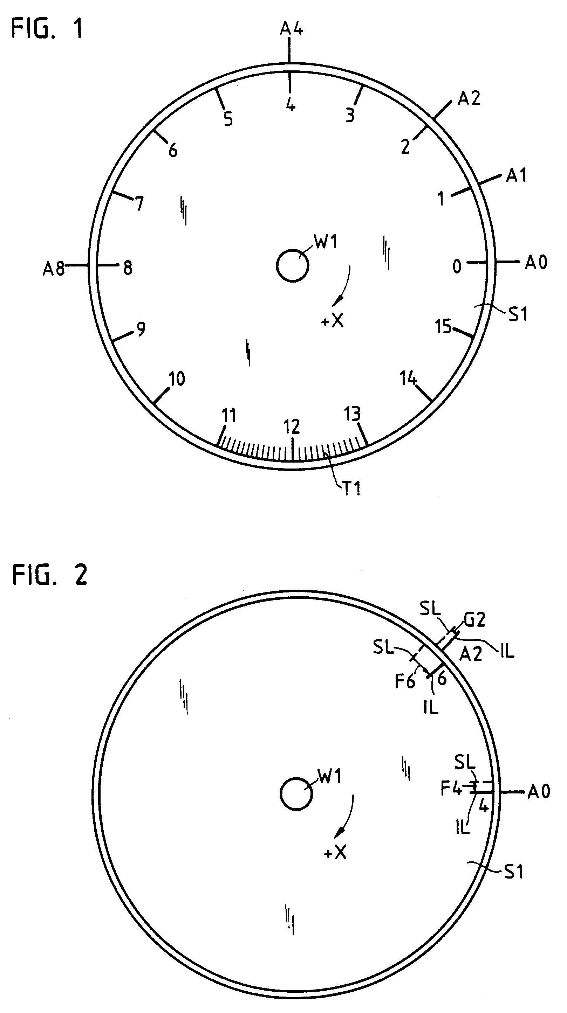

In Figur 1 ist schematisch eine erste Winkelmeßeinrichtung zum Messen der Relativlage zweier nicht dargestellter Objekte, beispielsweise zweier Maschinenteile einer Bearbeitungsmaschine, gezeigt. Eine drehbare kreisförmige Teilscheibe S1 ist mittels einer Welle W1 mit dem einen Objekt verbunden und weist eine inkrementale Winkelteilung T1 auf, die von einer mit dem anderen Objekt verbundenen Abtasteinheit Ao zur Gewinnung von Winkelmeßwerten für die Relativlage der beiden Objekte abgetastet wird.

Da eine solche inkrementale Winkelteilung T1 im allgemeinen jedoch fertigungsbedingt mit gewissen Teilungsfehlern behaftet ist, die bei Präzisionsmessungen nicht mehr tolerierbare Winkelmeßfehler zur Folge haben, ist in der Winkelmeßeinrichtung eine Kalibriereinrichtung integriert, die neben der Abtasteinheit A0 vier weitere Abtasteinheiten A1, A2, A4, A8 in bestimmten ungleichen Winkelabständen an der Peripherie der Teilscheibe S1 aufweist, die ebenfalls mit dem anderen Objekt verbunden sind; die fünf Abtasteinheiten A0, A1, A2, A4, A8 sind jeweils durch einen Abtaststrich durch die Mitte ihres Abtastfeldes dargestellt.

Zwei der Abtasteinheiten A0, A1, A2, A4, A8 bilden jeweils einen Meßzirkel mit dem Zirkelwinkel als eingeschlossenem Winkel. Diese Zirkelwinkel können nun unterschiedlich gewählt werden; nach Figur 1 bestehen zwischen der Abtasteinheit A0 und den vier weiteren Abtasteinheiten A8, A4, A2, A1 die vier Zirkelwinkel 2π/2, 2π/4, 2π/8, 2π/16.

Die Winkelteilung T1 kann man sich in 16 Winkelteilungsfelder unterteilt vorstellen, deren Teilungsfeldmitten symbolisch durch die Teilungsstriche 0-15 dargestellt sind. Die Abtasteinheiten A0, A1, A2, A4, A8 stehen in der Winkellage 0 nach Figur 1 den Teilungsstrichen 0-15 mit den gleichen Nummern direkt gegenüber.

Wie aus Figur 2 ersichtlich, bestehen im allgemeinen bei allen Winkelteilungsfeldern wegen der Teilungsfehler der Winkelteilung T1 Winkelabweichungen F1-F15 der Ist-Lagen IL der Teilungsstriche 1-15 von ihren Soll-Lagen SL; lediglich der Teilungsstrich 0 soll definitionsgemäß keine Winkelabweichung (F0=0) aufweisen. Ebenso weisen die Abtasteinheiten A1, A2, A4, A8 Grundabweichungen G1, G2, G4, G8 ihrer Ist-Lagen IL von ihren Soll-Lagen SL auf, mit Ausnahme der Abtasteinheit A0, die definitionsgemäß keine Grundabweichung (G0=0) aufweisen soll.

Bei langsamer Drehung der Teilscheibe S1 zur Kalibrierung der Winkelteilung T1 erzeugen die Abtasteinheiten A0, A1, A2, A4, A8 in ihren integrierten Zählern Meßwerte M0, M1, M2, M4, M8, die in einen nicht dargestellten Rechner zur Berechnung der Winkelabweichungen F1-F15 der Teilungsstriche 1-15 und der Grundabweichungen G1, G2, G4, G8 der Abtasteinheiten A1, A2, A4, A8 eingegeben werden. Zu Beginn dieser Kalibrierung erzeugt bei der Drehung der Teilscheibe S1 in der Drehrichtung +X die Abtasteinheit A0 bei der Abtastung des Teilungsstriches 0 einen Referenzimpuls, der die Zähler der Abtasteinheiten A0, A1, A2, A4, A8 auf den Wert 0 setzt. Bei einer fehlerfreien Winkelteilung T1 würden beim Weiterdrehen der Teilscheibe S1 alle Zähler der Abtasteinheiten A0, A1, A2, A4, A8 nun die gleichen Meßwerte M0=M1=M2=M4=M8 anzeigen. In Wirklichkeit werden sich wegen der Teilungsfehler der Winkelteilung T1 unterschiedliche Meßwerte M0‡M1‡M2‡M4‡M8 ergeben, aus denen sich die Winkelabweichungen F1-F15 der Teilungsstriche 1-15, wie nachfolgend erläutert, ermitteln lassen.

Jedes Mal, wenn bei der Drehung der Teilscheibe S1 zur Kalibrierung ein Teilungsstrich 1-15 von der Abtasteinheit A0 abgetastet wird, werden die momentanen Meßwerte M0, M1, M2, M4, M8 aller Abtasteinheiten A0, A1, A2, A4, A8 ermittelt und in einem Speicher des Rechners abgelegt. Wenn beispielsweise der Teilungsstrich 4 von der Abtasteinheit A0 abgetastet wird, stehen im zugehörigen Zähler der Abtasteinheit A1 der Meßwert M1,4 und im zugehörigen Zähler der Abtasteinheit A2 der Meßwert M2,4 usw. an; bei der Abtastung des Teilungsstriches n durch die Abtasteinheit A0 zeigt der Zähler der Abtasteinheit Ak den Meßwert Mk,n an. Der obige Meßwert M2,4 im Zähler der Abtasteinheit A2 setzt sich nach Figur 2 aus der Winkelabweichung F4 des Teilungsstriches 4 und aus der Winkelabweichung F6 des Teilungsstriches 6 sowie aus der Grundabweichung G2 der Abtasteinheit A2 zusammen. Es ergeben sich damit die folgenden Meßwerte Mk,n:
- K = 8: M 8, 0 = F 8 - F 0 - G8 *
M 8, 1 = F 9 - F 1 - G8
M 8, 2 = F10 - F 2 - G8
M 8, 3 = F11 - F 3 - G8
M 8, 4 = F12 - F 4 - G8
M 8, 5 = F13 - F 5 - G8
M 8, 6 = F14 - F 6 - G8
M 8, 7 = F15 - F 7 - G8
M 8, 8 = F 0 - F 8 - G8 *
M 8, 9 = F 1 - F 9 - G8
M 8,10 = F 2 - F10 - G8
M 8,11 = F 3 - F11 - G8
M 8,12 = F 4 - F12 - G8
M 8,13 = F 5 - F13 - G8
M 8,14 = F 6 - F14 - G8
M 8,15 = F 7 - F15 - G8
- K = 4: M 4, 0 = F 4 - F 0 - G4 *
M 4, 1 = F 5 - F 1 - G4
M 4, 2 = F 6 - F 2 - G4
M 4, 3 = F 7 - F 3 - G4
M 4, 4 = F 8 - F 4 - G4 *
M 4, 5 = F 9 - F 5 - G4
M 4, 6 = F10 - F 6 - G4
M 4, 7 = F11 - F 7 - G4
M 4: 8 = F12 - F 8 - G4 *
M 4, 9 = F13 - F 9 - G4
M 4,10 = F14 - F10 - G4
M 4,11 = F15 - F11 - G4
M 4,12 = F 0 - F12 - G4 *
M 4,13 = F 1 - F13 - G4
M 4,14 = F 2 - F14 - G4
M 4,15 = F 3 - F15 - G4
- K = 2: M 2, 0 = F 2 - F 0 - G2 *
M 2, 1 = F 3 - F 1 - G2
M 2, 2 = F 4 - F 2 - G2 *
M 2, 3 = F 5 - F 3 - G2
M 2, 4 = F 6 - F 4 - G2 *
M 2, 5 = F 7 - F 5 - G2
M 2, 6 = F 8 - F 6 - G2 *
M 2, 7 = F 9 - F 7 - G2
M 2, 8 = F10 - F 8 - G2 *
M 2, 9 = F11 - F 9 - G2
M 2,10 = F12 - F10 - G2 *
M 2,11 = F13 - F11 - G2
M 2,12 = F14 - F12 - G2 *
M 2,13 = F15 - F13 - G2
M 2,14 = F 0 - F14 - G2 *
M 2,15 = F 1 - F15 - G2
- K = 1: M 1, 0 = F 1 - F 0 - G1 *
M 1, 1 = F 2 - F 1 - G1 *
M 1, 2 = F 3 - F 2 - G1 *
M 1, 3 = F 4 - F 3 - G1 *
M 1, 4 = F 5 - F 4 - G1 *
M 1, 5 = F 6 - F 5 - G1 *
M 1, 6 = F 7 - F 6 - G1 *
M 1, 7 = F 8 - F 7 - G1 *
M 1: 8 = F 9 - F 8 - G1 *
M 1, 9 = F10 - F 9 - G1 *
M 1,10 = F11 - F10 - G1 *
M 1,11 = F12 - F11 - G1 *
M 1,12 = F13 - F12 - G1 *
M 1,13 = F14 - F13 - G1 *
M 1,14 = F15 - F14 - G1 *
M 1,15 = F 0 - F15 - G1 *
Für die Errechnung der Winkelabweichungen F1-F15 der Teilungsstriche 1-15 sind nur die gesternten Meßwerte Mk,n erforderlich:
F 0 = 0
F 8 = (M 8, 0 - M 8, 8 + F 0 + F 0) / 2
F 4 = (M 4, 0 - M 4, 4 + F 0 + F 8) / 2
F12 = (M 4, 8 - M 4,12 + F 8 + F 0) / 2
F 2 = (M 2, 0 - M 2, 2 + F 0 + F 4) / 2
F 6 = (M 2, 4 - M 2, 6 + F 4 + F 8) / 2
F10 = (M 2, 8 - M 2,10 + F 8 + F12) / 2
F14 = (M 2,12 - M 2,14 + F12 + F 0) / 2
F 1 = (M 1, 0 - M 1, 1 + F 0 + F 2) / 2
F 3 = (M 1, 2 - M 1, 3 + F 2 + F 4) / 2
F 5 = (M 1, 4 - M 1, 5 + F 4 + F 6) / 2
F 7 = (M 1, 6 - M 1, 7 + F 6 + F 8) / 2
F 9 = (M 1, 8 - M 1, 9 + F 8 + F10) / 2
F11 = (M 1,10 - M 1,11 + F10 + F12) / 2
F13 = (M 1,12 - M 1,13 + F12 + F14) / 2
F15 = (M 1,14 - M 1,15 + F14 + F 0) / 2
Die Grundabweichungen G1, G2, G4, G8 berechnet man am besten aus allen Meßwerten Mk,n:
G0 = 0
G1 = -(M1,0 + M1,1 + M1,2 ... + M1,15) / 16
G2 = -(M2,0 + M2,1 + M2,2 ... + M2,15) / 16
G4 = -(M4,0 + M4,1 + M4,2 ... + M4,15) / 16
G8 = -(M8,0 + M8,1 + M8,2 ... + M8,15) / 16
allgemein: 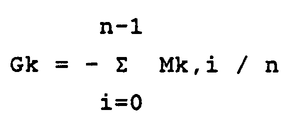
Dieses vorbeschriebene Rechenverfahren läßt sich leicht auf kleinere Zirkelwinkel ausdehnen.

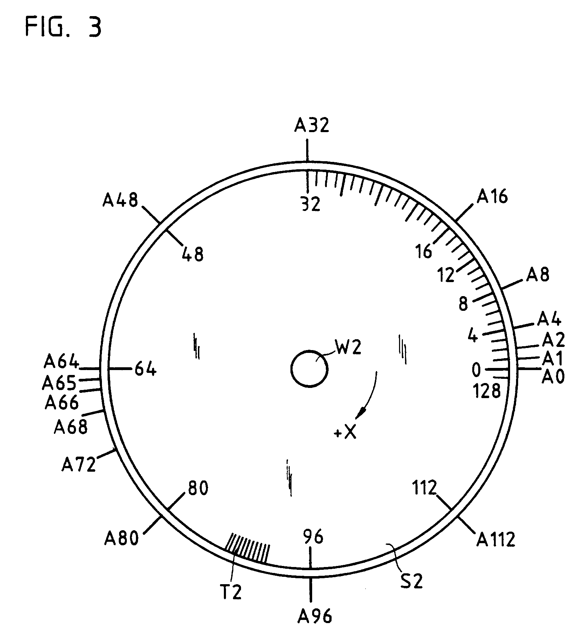

In Figur 3 ist schematisch eine zweite Winkelmeßeinrichtung zum Messen der Relativlage zweier nicht gezeigter Objekte gezeigt. Eine drehbare kreisförmige Teilscheibe S2 ist mittels einer Welle W2 mit dem einen Objekt verbunden und weist eine inkrementale Winkelteilung T2 auf, die von acht mit dem anderen Objekt verbundenen Abtasteinheiten A0, A1, A2, A4, A8, A16, A32, A48 als Kalibriereinrichtung abgetastet wird, die in bestimmten ungleichen Winkelabständen an der Peripherie der Teilscheibe S2 angeordnet sind und einen kleinsten Zirkelwinkel 2π/128 ermöglichen. Die Winkelteilung T2 ist in 128 Winkelteilungsfelder unterteilt, deren Teilungsfeldmitten durch die Teilungsstriche 0-128 dargestellt sind. Mit einem Rechenverfahren - entsprechend dem oben dargestellten - werden die Winkelabweichungen Fn der 128 Teilungsstriche sowie die Grundabweichungen Gk der 8 Abtasteinheiten Ak ermittelt.

Zur Steigerung der Kalibriergenauigkeit können aber auch zusätzliche Abtasteinheiten Ak vorgesehen werden. Insbesondere ist es vorteilhaft, den 8 Abtasteinheiten Ak nach Figur 3 weitere 8 Abtasteinheiten Ak jeweils diametral gegenüberliegend zuzuordnen, so daß auch Exzentrizitätsfehler der Lagerung der Welle W2 eliminiert werden, wenn sie bei der Kalibrierung und bei einem nachfolgenden Meßvorgang nicht identisch sind.

Bei der Wahl des kleinsten Zirkelwinkels berücksichtigt man den erfahrungsgemäß zu erwartenden Verlauf der Winkelabweichungen Fn. Wird eine photoelektrische Abtasteinheit A verwendet, die bei der Abtastung eine Vielzahl von Teilungsperioden der inkrementalen Winkelteilung T abtastet und dabei einen Mittelwert über die Breite des abgetasteten Teilungsfeldes bildet, z.B. mit einer Breite des Abtastfeld von 2π/128, und wählt man den kleinsten Zirkelwinkel ebenfalls 2π/128, so werden alle Winkelabweichungen lückenlos erfaßt und es ergibt sich ein glatter Fehlerverlauf. Die Winkelabweichungen zwischen den Mitten der 128 Teilungsfelder könnten aus dem Fehlerverlauf mit genügender Genauigkeit durch Linear-Interpolation ermittelt werden.

Da bei diesem Verfahren eine stetige Kalibrierkurve zu erwarten ist, darf man hierbei anstelle von 128 Meßwerten M je Abtasteinheit A eine wesentlich größere Anzahl, z.B. 2048 Meßwerte M bilden und aus aufeinanderfolgenden 16 Meßwerten den Mittelwert errechnen und abspeichern, der die Winkelabweichung des Teilungsfeldes mit geringerer Unsicherheit angibt.

Wenn die Winkelabweichung der Teilungsstriche und die Grundabweichung aller Abtasteinheiten bekannt ist, kann jede Abtasteinheit zur Bestimmung des richtigen Winkelmeßwertes herangezogen werden.

Der Winkelmeßwert kann somit auch aus den Winkelmeßwerten aller z.B. 16 Abtasteinheiten durch Mittelwertbildung im Rechner mit entsprechend geringerer Meßunsicherheit abgeleitet werden.

Selbstverständlich ist es ratsam, auch Kompensationsverfahren nach dem Stande der Technik zur Korrektur der Abweichungen der Signalparameter der Abtastsignale oder direkt zur Korrektur der Interpolationswerte anzuwenden. Sie werden zweckmäßig dem beschriebenen Kalibrierverfahren für die Winkelabweichungen der Winkelteilung vorangestellt.

Zur weiteren Steigerung der Kalibriergenauigkeit durch Verringerung der zufälligen Fehler ist es auch möglich, den Kalibriervorgang wiederholt hintereinander ablaufen zu lassen und Mittelwerte zu bestimmen, da ein Kalibriervorgang im Prinzip nur etwa 1 bis 2 Minuten dauert.

Zusätzlich zur Eliminierung der Exzentrizität der Teilscheibe zur Lagerung kann durch einen einfachen Rechenvorgang auch der Exzentrizitätsfehler ermittelt werden und seine Änderung überwacht werden. Dadurch lassen sich z.B. Meß- oder Bearbeitungsfehler, die durch thermische Veränderungen der Lagerung oder durch Einwirkung von Kräften oder Momenten entstehen, verringern oder ganz beseitigen.

Die Winkelmeßeinrichtung kann auch so betrieben werden, daß neben einer hohen Genauigkeit auch eine hohe Redundanz erzeugt wird.

Wie bereits erwähnt, können Winkelwerte von allen Abtasteinheiten mit Korrekturen versehen werden oder es können Winkelwerte von allen Paaren von diametral angeordneten Abtasteinheiten gerechnet und korrigiert werden. Bevor ein Mittelwert aus diesen Winkelwerten errechnet wird, kann nun zunächst überprüft werden, ob die Winkelwerte innerhalb bestimmter vorher festgelegter Toleranzen übereinstimmen.

Liegen Meßwerte außerhalb dieser Toleranz, werden sie ausgeschieden und das endgültige Meßergebnis wird aus den verbleibenden gültigen Winkelwerten gerechnet. Aus den Abweichungen können auch charakteristische Werte wie die Standardabweichung der Streuung errechnet werden. Somit kann neben dem Meßwert auch ein Kennwert zur Beurteilung der Zuverlässigkeit des Meßergebnisses ermittelt und ausgegeben werden.

## Patentansprüche

1. Winkelmeßeinrichtung zum Messen der Relativlage zweier Objekte, bei der eine drehbare Teilscheibe (S1, S2) mit dem einen Objekt verbunden ist und eine inkrementale Winkelteilung (T1, T2) aufweist, die von mit dem anderen Objekt verbundenen und über den Umfang der Winkelteilung (T1, T2) gegeneinander versetzten Abtasteinheiten (Ak) abgetastet wird, dadurch gekennzeichnet, daß
a) ausgehend von einer Abtasteinheit (A0) innerhalb 180° der Winkelteilung (T1, T2) mehrere Abtasteinheiten (Ak) vorgesehen sind, die relativ zur ersten Abtasteinheit (A0) unterschiedliche Zirkelwinkel einschließen, wobei jeder Zirkelwinkel ein ganzzahlig Vielfaches des kleinsten Zirkelwinkels ist, daß
b) die Winkelteilung (T1, T2) in mehrere zumindest annähernd gleiche Winkelbereiche (0 bis 15; 0 bis 128) entsprechend dem kleinsten Zirkelwinkel aufgeteilt wird, daß
c) von den Abtasteinheiten (Ak) durch Abtastung der Winkelteilung (T1, T2) Zählerwerte als Meßwerte (Mk) gebildet werden, daß
d) von den Meßwerten (Mk) einer Abtasteinheit (A0) gesteuert zeitgleich die Meßwerte (Mk) aller Abtasteinheiten (Ak) ausgelesen und in einen Rechner übernommen werden, so daß
e) bei der Kalibrierung für jeden Winkelbereich (0 bis 15; 0 bis 128) der Winkelteilung (T1, T2) zumindest eine der Anzahl der Abtasteinrichtungen (Ak) entsprechende Anzahl von Meßwerten (Mk) erfaßt und einem Rechner zugeführt wird, der aus diesen Meßwerten (Mk) für jeden Winkelbereich (0 bis 15; 0 bis 128) eine Winkelabweichung der Winkelteilung (T1, T2) berechnet, mit der bei der späteren Winkelmessung die Meßwerte (Mk) der Abtasteinheiten (Ak) korrigiert werden.

2. Winkelmeßeinrichtung nach Anspruch 1, dadurch gekennzeichnet, daß jeder Abtasteinheit (Ak) eine zusätzliche Abtasteinheit diametral gegenüberliegend zugeordnet ist.

3. Winkelmeßeinrichtung nach Anspruch 1, dadurch gekennzeichnet, daß fünf Abtasteinheiten (A0, A1, A2, A4, A8) die Winkel (2π/2, 2π/4, 2π/8, 2π/16) miteinander einschließen.

## Claims

1. An angle measuring device for measuring the relative position of two objects, in which a rotatable graduated disc (S1, S2) is connected to one object and comprises an incremental angular scale (T1, T2), which is sensed by sensing units (Ak) connected to the other object and offset from one another round the periphery of the angular scale (T1, T2), characterized in that
a) starting from one sensing unit (A0), a plurality of sensing units (Ak) are provided within 180° of the angular scale (T1, T2), which include different angles of a circle relative to the first sensing unit (A0), wherein each angle of a circle is an integral multiple of the smallest angle of a circle,
b) the angular scale (T1, T2) is divided into a plurality of at least approximately equal angular regions (0 to 15; 0 to 128) corresponding to the smallest angle of a circle,
c) count values are formed as measured values (Mk) by sensing the angular scale (T1, T2),
d) the measured values (Mk) of all sensing units (Ak) are sensed under the control of the measured values (Mk) of one sensing unit (A0) and are transferred to a computer, so that
e) in the calibration of each angular region (0 to 15; 0 to 128) of the angular scale (T1, T2) at least one set of measured values (Mk) corresponding to the number of sensing devices (Ak) is derived and is fed to a computer which computes an angular deviation of the angular scale (T1, T2) from these measured values (Mk) for each angular region (0 to 15; 0 to 128), with which the measured values (Mk) of the sensing units (Ak) are corrected in the later angular measurement.

2. An angle measuring device according to claim 1, characterized in that an additional, diametrically opposite sensing unit is associated with each sensing unit (Ak).

3. An angle measuring device according to claim 1, characterized in that five sensing units (A0, A1, A2, A4, A8) include the angles (2π/2, 2π/4, 2π/8, 2π/16) with each other.

## Revendications

1. Dispositif de mesure angulaire pour la mesure de la position relative de deux objets, dans lequel un disque gradué (S1, S2) lié l'un des objets porte une graduation angulaire (T1, T2) de type incrémental qui est lue par des unités de lecture (Ak) liées à l'autre objet qui sont réparties en étant mutuellement décalées sur le pourtour de la graduation angulaire, caractérisé
a) par le fait qu'il est prévu, sur 180° de la graduation angulaire (T1, T2) mesuré à partir d'une unité de lecture (A0), plusieurs unités de lecture (Ak) qui, par rapport à la première unité de lecture (A0) lisent des secteurs de cercle différents, chaque secteur de cercle étant un multiple entier du secteur minimal,
b) par le fait que la graduation angulaire (T1, T2) est divisée en plusieurs zones angulaires (0 à 15; 0 à 128) au moins sensiblement égales correspondant au secteur minimal,
c) par le fait que les unités de lecture (Ak) génèrent par lecture de la graduation angulaire (T1, T2) des valeurs de compteur servant de valeurs de mesure (Mk),
d) par le fait que les valeurs de mesure (Mk) d'une unité de lecture (A0) commandent la lecture simultanée des valeurs de mesure (Mk) de toutes les unités de lecture (Ak) et leur introduction dans un calculateur de telle sorte que
e) lors de l'étalonnage, pour chaque zone angulaire (0 à 15; 0 à 128) de la graduation angulaire (T1, T2), un nombre de valeurs de mesure (Mk) qui correspond au moins au nombre d'unités de lecture (Ak) sont lues et transmises à un calculateur qui, à partir desdites valeurs de mesure (Mk) calcule pour chaque zone angulaire (0 à 15; 0 à 128) un écart angulaire de la graduation angulaire (T1, T2) au moyen duquel les valeurs de mesure (Mk) des unités de lecture (Ak) seront corrigées lors des mesures ultérieures.

2. Dispositif de mesure selon la revendication 1, caractérisé par le fait qu'à chaque unité de lecture (Ak) est associée une unité de lecture supplémentaire diamétralement opposée.

3. Dispositif de mesure selon la revendication 1, caractérisé par le fait que cinq unités de lecture (A0, A1, A2, A4, A8) couvrent ensemble les angles (2π/2, 2π/4, 2π/8, 2π/16).
